# EUROPEAN PATENT APPLICATION

(11) **EP 4 848 713 A1**
(43) Date of publication of application: **02.12.2026**
(21) Application number: 25179135.6
(22) Date of filing: 27.05.2025
(51) Int. Cl.: H04N 19/124, H04N 19/146, H04N 19/18, H04N 19/423, H04N 19/436, H04N 19/184, H04N 19/129, H04N 19/635

(54) **METHOD AND APPARATUS FOR ENCODING A DIGITAL IMAGE**

(71) Applicant: intoPIX s.a., 1348 Louvain-La-Neuve (BE)
(72) Inventor: BUYSSCHAERT, Charles, Daniel, Nicole, André, Sylvestre, 1170 Bruxelles (BE); DE CONINCK, Adrien, 1495 Marbais (BE); DAMMAN GEEROMS, Corentin, Aurélien, Sébastien, 1950 Kraainem (BE)
(74) Representative: Gevers Patents

(57) **Abstract**

The invention relates to a method, apparatus, and computer program for encoding at least one portion of an original image (520) into a corresponding portion of an encoded image (530) according to an encoding scheme in which an evaluation of a cost of segments of image coefficients is made according to a value of a quantization level, wherein said evaluation is performed in a budget computation step according to an incremental evaluation scheme based on a predetermined order.

## Description

### Field of the invention

The present invention relates to the field of digital image data encoding. An aspect of the invention relates to a method for encoding image data according to an encoding scheme in which an evaluation of a cost of segments of image coefficients is made according to a value of a quantization level. Other aspects of the invention relate to an encoder of image data and a computer program for encoding image data.

### Background of the invention

Image compression is required when one needs to transmit or store an image that would require a larger bitrate than the available bandwidth of a communication channel or the capacity of a storage medium. This is generally possible when the image contains a significant amount of redundancy, and some amount of details that are imperceptible to the human eye, or at least that could be removed without compromising the purpose of the transmission. The compression is said to be lossless when the image is not modified by the compression-decompression cycle, and thus is identical at the emitter and the receiver. However, it is usually not possible to guarantee a lossless compression since it depends on the intrinsic characteristics of the image, in which the redundancy and the ability to remove it by a clever encoding alone may not always succeed in reducing the bitrate or data cost enough. In such case, a lossy compression scheme is required, and an encoder reduces the information contained in the image by quantization, in order to guarantee a required output bitrate at the expense of quality. The rate allocation unit computes, for all the image values, the levels of quantization that maximize the quality under a bitrate or data budget constraint. The process of encoding the resulting data and all the information necessary for a decoder to reconstruct the image is referred to as entropy encoding and is performed by the entropy encoder.

Image compression algorithms may apply a decorrelative transform before entropy encoding image data. A decorrelative transform allows the entropy of a set of image samples to be reduced by concentrating probabilities of occurrence on a subset of values. A decorrelative transform may be for example a color transform (CT), such as a reversible color transform (RCT), a temporal decorrelative transform based on interframe predictions, a discrete cosine transform (DCT), or a wavelet transform, such as a discrete wavelet transform (DWT). Image samples after a decorrelative transform are referred to herein as image coefficients. Image coefficients may be identical to image samples if no decorrelative transform is applied.

Document EP 2 773 122 A1 describes a method and device for lossless data compression wherein one groups data into groups of n words of m bits; one detects for each group the value of the Greatest Coded Line Index (GCLI), the GCLI being the index of the highest weight non-zero bit among the bits of the words in a group; one produces for each group an output data set comprising the GCLI bits of lowest weight of the words of the group, and meta-data comprising the value of the GCLI. The values of the GCLIs are comprised between zero, when all words of a group are zero, and m, when at least one word in the group has a bit of weight m equal to 1. Therefore, binary coding of the GCLIs requires ceil(log2(m)) bits, ceil(x) being a function returning the smallest integer greater than x. This document also proposes an improvement wherein one replaces the GCLI in the output data set by the difference between the GCLI value and a predicted value of the GCLI. In doing so, the values to be coded may be smaller, and a unary coding may require less space than binary coding of the GCLIs.

Document EP 3 343 921 A1 describes a method and device for compressing a sequence of signed coefficients wherein coefficients are grouped, for each group, the greatest coded line index (GCLI) is determined, a quantization level t is applied and only the GCLI to t+1 weight bits of the coefficients are copied into an output stream together with the value of the GCLI, and sign bits are not coded for coefficients having a zero quantized value. Document EP 3 343 921 A1 also describes a method for determining a data budget required for compressing a sequence of signed coefficients, in dependence of a quantization level, and a method for compressing an image within the limits of a given data budget constraint.

The JPEG XS standard, formally known as ISO/IEC 21122, is an interoperable, visually lossless, low-latency, and lightweight image and video coding system. The JPEG XS standard is divided into several parts, each part specifying specific aspects of the standard. JPEG XS Part 1, formally known in its second edition as ISO/IEC 21122-1:2022, normatively defines how a compressed JPEG XS codestream can be transformed into a decoded image, a "codestream" being defined in the JPEG XS standard as a compressed image data representation that includes all necessary data to allow a (full or approximate) reconstruction of the sample values of a digital image. Moreover, JPEG XS Part 1 provides some key algorithms enabling an encoder to generate a JPEG XS codestream. In particular, JPEG XS Part 1 (ISO/IEC 21122-1:2022) specifies some types of entropy decoding and related encoding in its subclause C.6. Herein the expression "JPEG XS standard" generally designates the JPEG XS specification according to documents published under reference ISO/IEC 21122, including any part of said specification and any edition of said parts.

The following definitions and notations are used herein. An "image coefficient", also simply referred to herein as a "coefficient", is an integer number, coded in binary representation, and having a magnitude and an optional sign value. Parameter N_{S} designates the number of bits coding the value of a coefficient, which is also herein referred to as the "size" of a coefficient. A coefficient may correspond to an image data, such as for example the value of a pixel of an image, or the value of a color component of a pixel of an image. Coefficients may be grouped into a "group of coefficients", which is also referred to as a "code group" in the JPEG XS standard. Parameter N_{g} designates the number of coefficients in a group, which is also herein referred to as the "size" of a group. In a group of N_{g} coefficients, a "bitplane" is an array of N_{g} bits of the coefficients of the group all having the same significance. The significance, or weight, of a bit relates to the position of the bit within a binary number, the "most significant bit", or "MSB", having the highest weight, i.e. the highest position within a binary number, and the "least significant bit", or "LSB", having the lowest weight, i.e. the lowest position within a binary number.

Herein, a "significant coefficient" designates a coefficient whose value is not equal to zero. A "significant group" is a group of coefficients comprising at least one significant coefficient. A coefficient may become equal to zero, and thus no longer significant, after a quantization operation. A quantization operation reduces the number of bits used for coding the value of a coefficient or a set of coefficients. A quantization operation is performed based on the value of a quantization level. A quantization level determines the extent to which a coefficient is quantized in the quantization operation, i.e. the amount of information that is removed from the coefficient. A quantization operation may be for example a fixed width quantization, a deadzone quantization, or a uniform quantization, the latter two being specified in the JPEG XS standard. In particular, a quantization operation may be performed by truncating, i.e. removing, a number of least significant bits (LSB) from the magnitude of a coefficient or a set of coefficients. In such a case, the quantization level corresponds to a "truncation level", indicating the number of bits removed from the magnitude of a coefficient, or the number of bitplanes removes from a set or a group of coefficients.

Herein, the term "computational complexity" generally refers to the resources needed to run a computation, in terms of the number of operations required and/or in terms of the number of memory accesses (read/write) required. A computation requiring a higher computational complexity is one that requires more operations and/or more memory accesses. A computation requiring a lower computational complexity is one that requires less operations and/or less memory accesses. Unless otherwise specified, the term "computational complexity" is used herein to designate the number of operations required for a computation, and/or the number of memory accesses required for that computation. In addition, the quantity of data retrieved from a memory is related to the size of the data bus of the memory, i.e. the quantity of data retrieved in each memory access, so that a larger number of memory accesses generally results in a larger quantity of data retrieved from the memory. Therefore, a higher computational complexity may also correspond to a larger quantity of data retrieved from a memory. In the particular case of a processor with a cache memory, the processor may read a whole cache line from the cache memory and then extract data from this cache line. In this case, the computational complexity may be measured in terms of the number of cache lines accessed by the processor for performing a given computation.

A known technique for determining a suitable value of the quantization level, i.e. a value that respects the budget constraint, in a rate allocation process is to search for said value using binary search. However, binary search may lead to a budget computation step requiring a high computational complexity, i.e. a large number of operations and/or a large number of memory accesses. Indeed, in a binary search approach, when a suitable value of the quantization level is found, there is no guarantee that said value is optimal, i.e. that it minimizes the loss of information between the original image and the encoded image due to the quantization operation. Therefore, it is necessary to compute the cost of all segments of image coefficients in each budget computation step when using a binary search approach, which requires a high computational complexity.

In view of the above deficiencies of the prior art, there is a need to reduce the computational complexity of a rate allocation process aiming at finding suitable quantization level values in order to achieve a target size of an encoded image.

### Summary of the invention

It is an object of the present invention to address this need. To this end, there is provided a method, apparatus, and computer program for encoding image data wherein a budget computation is performed according to an incremental evaluation scheme based on a predetermined order.

According to a first aspect of the invention, there is provided a computer-implemented method for encoding at least one portion of an original image into a corresponding portion of an encoded image according to the following steps:
a) in an initialization step, initializing a quantization level to an initial value of the quantization level and providing a target budget for the portion of the encoded image;
b) in a generation step, generating a set of segments from a set of image coefficients derived from the portion of the original image;
   wherein the set of segments comprises at least one segment, and
   wherein a segment is a software object comprising a subset of coefficients from the set of image coefficients and a cost function to be applied to the subset of coefficients with a given value of a quantization level for computing a cost of the segment for said value of the quantization level;
c) in a budget computation step, computing a cost of the set of segments incrementally for the current value of the quantization level,
   wherein the budget computation step is performed according to an incremental evaluation scheme based on a predetermined order, and
   wherein the budget computation step comprises the following substeps, starting with a first segment in the set of segments as a current segment:
      c)(i) computing a cost of the current segment for the current value of the quantization level;
      c)(ii) storing the cost of the current segment in a memory;
      c)(iii) adding the cost of the current segment to the cost of the set of segments;
      c)(iv) if the cost of the set of segments exceeds the target budget, stopping the current budget computation step c);
      c)(v) if at least one further segment is available in the set of segments, selecting a next segment in the set of segments as the new current segment, wherein the selection is made according to the predetermined order of the incremental evaluation scheme;
      c)(vi) repeating the preceding substeps until the cost of each segment in the set of segments has been evaluated for the current value of the quantization level;
d) if the cost of the set of segments has exceeded the target budget, increasing the value of the quantization level and performing a new budget computation step c) for the increased value of the quantization level;
e) if the cost of the set of segments has not exceeded the target budget, entropy encoding the set of image coefficients according to the current value of the quantization level for producing the portion of the encoded image.

The method for encoding according to the present invention may be performed by an encoder comprising a processor and a memory, and configured for performing said method.

The method for encoding of the invention may operate on the full original image or iteratively on respective portions of the original image for producing respective portions of the encoded image. When the method is applied on the full original image, then the method operates on a single portion of the original image, said portion corresponding to the full original image, and steps a) to e) are executed once. When the method is applied iteratively on respective portions of the original image, steps a) to e) are executed multiple times, i.e. once for each portion of the original image.

In the step e) of the method for encoding, the condition "if the cost of the set of segments has not exceeded the target budget" also includes the case where the cost of the set of segments is equal to the target budget.

In the method of the invention, a target budget is provided for a portion of the encoded image for which a quantization level is determined e.g. in a rate allocation process of an encoder. Based on the target budget, an encoder determines a suitable value of the quantization level for entropy encoding a set of image coefficients corresponding to the portion of the encoded image so as to respect the target budget.

In particular, the target budget is not to be confused with the size of the encoded image, which is the sum of the size of all portions of the encoded image. In order not to confuse terms, "target budget" as used herein is only meant to designate the size of a portion of the encoded image, whereas the (total) size of the encoded image is referred to herein as the "size of the encoded image".

The method of the invention may also be applied for encoding a sequence of images, which may also be referred to as a sequence of frames. An encoded image may also be referred to herein as an encoded frame.

The method for encoding according to the present invention allows image samples to be encoded with a reduced computational complexity. Indeed, the progressive, or incremental, increase of the quantization level according to the invention allows an encoder executing the method to avoid evaluating the whole set of segments for determining that a current quantization level does not allow to respect a target budget. Instead, the encoder may discard a quantization level as soon as the target budget is exceeded. So, with the method of the invention, i.e. starting with a low quantization level, for which the budget of the whole set of segments is likely to exceed the target budget, the encoder may quickly discard quantization levels and progressively evaluate more and more segments in each iteration, i.e. each increase in the quantization level, until finding a quantization level which respects the target budget, said quantization level being *de facto* the optimal quantization level, i.e. the lowest one, or in other words the one keeping the most information from the set of segments while respecting the target budget. In contrast, with an encoding scheme based on a binary search and starting at an average quantization level, the encoder will need to evaluate the cost of the whole set of segments in case the quantization level is too high, i.e. for which the target budget is exceeded, without knowing if a given quantization level is optimal, i.e. lowest, or if a lower quantization level would also respect the target budget.

A "segment" as used herein is a software object, or more generally a software entity or a software structure, comprising image coefficients prior to entropy coding and a cost function to compute a cost of the segment from said coefficients and for a given value of a quantization level. A segment has a type depending on the nature of the cost function. Examples of segment types are: a data segment, a GCLI segment, a sign segment. A data segment may be used to compute the cost of magnitudes of coefficients after quantization. A GCLI segment may be used to compute the cost of GCLI values of groups of coefficients after quantization. A sign segment may be used to compute the cost of sign values of significant coefficients after quantization. Segments of other types are generally possible within the scope of the present invention. Segments of different types may be derived from the same subset of coefficients with different cost functions. Herein, when different segments share the same subset of coefficients, they are referred to as "corresponding segments". Generally, the cost of a segment may be split into a first part that is independent from the value of the quantization level (the "quantization-independent part") and a second part that varies with or depends on the value of the quantization level. The quantization-independent part of the cost of a segment may also be referred to as a "fixed cost" of the segment.

The portion of the encoded image may comprise "packets" and "subpackets". A subpacket corresponds to a subset of coefficients comprised in a segment and entropy encoded for a given value of a quantization level. A subpacket has a type. The type of a subpacket is the type of the corresponding segment. Examples of subpacket types are: a data subpacket, a GCLI subpacket, a sign subpacket. A data subpacket comprises magnitudes of coefficients after quantization. A GCLI subpacket comprises GCLI values of groups of coefficients after quantization. A sign subpacket comprises sign values of significant coefficients after quantization. Subpackets of other types are generally possible within the scope of the present invention. A subpacket of a given type is produced from a segment of the same type whose coefficients are entropy encoded for a value of the quantization level. For example, a data subpacket is produced from a data segment whose coefficients are entropy encoded for a value of the quantization level. Similarly, a GCLI subpacket is produced from a GCLI segment whose coefficients are entropy encoded for a value of the quantization level. Similarly, a sign subpacket is produced from a sign segment whose coefficients are entropy encoded for a value of the quantization level. Subpackets may be grouped into packets. A packet comprises all subpackets derived from a same subset of coefficients. Subpackets of different types may be derived from the same subset of coefficients in a similar way as segments of different types being derived from the same subset of coefficients with different cost functions. Herein, when different subpackets share the same subset of coefficients, they are referred to as "corresponding subpackets".

A segment may be seen as a subpacket candidate. The cost of a segment may be evaluated for several values of the quantization level when searching for a suitable value of the quantization level, i.e. one that respects the target budget. The cost function computes a cost (e.g. the size in bytes) of a subpacket of the same type as the segment and derived from the same coefficients for a given value of a quantization level. The cost function of a segment may be a different function as the one used to compute an actual subpacket from the subset of coefficients.

The cost of a segment or a subpacket is a measure of the portion of a budget consumed by the segment or the subpacket. A cost of a segment or a subpacket typically corresponds to the size of the segment or the subpacket, which may be expressed as the number of bits or bytes occupied by the segment or the subpacket in a computer memory.

An optimal value of a quantization level is the suitable value of the quantization level that preserves the most information from a subset of coefficients. Typically, the optimal value of a quantization level is the lowest one, i.e. the one which removes the least information from the subset of coefficients.

Preferably, the set of segments comprises a plurality of segments. This allows a finer, or in other words more granular, allocation of the budget of the portion of the encoded image.

The method for encoding of the invention allows an encoder to determine a suitable value of the quantization level without having to compute the cost of segments for all possible values of the quantization level. Instead, the cost of the set of segments is computed incrementally for a given value of the quantization level in a given budget computation step c). In other words, the cost of segments is evaluated only for a single value of the quantization level in a given budget computation step c).

The method for encoding of the invention works in a different way from a known binary search approach. Indeed, in a binary search, if the cost of the set of segments has not exceeded the target budget, then the quantization level may be decreased for all segments and a new budget computation step may be performed, since there is no guarantee that the value of the quantization level is optimal, i.e. that it minimizes the loss of information between the original image and the encoded image due to the quantization operation. However, in the present invention, when the cost of the set of segments has not exceeded the target budget, then an optimal value of the quantization level is guaranteed to be found, and therefore the set of coefficients may be directly entropy encoded according to said value of the quantization level.

In addition, in a binary search approach, it is generally needed to evaluate the cost of all segments of a set of segments in a budget computation step, namely in the case where the quantization level is too high, since there is no guarantee that the value of the quantization level is optimal. However, in the present invention, only the cost of a subset of the segments is computed in the budget computation step, thereby performing a so-called "partial evaluation" of the cost of the set of segments, and the budget computation step is stopped as soon as the cost of the segments exceeds the target budget, thereby reducing the computational complexity of the budget computation step.

The partial evaluation of the cost of the set of segments according to the present invention allows the computational complexity of the method for encoding to be reduced. In other words, said partial evaluation allows the at least one portion of the original image to be encoded with a higher efficiency, in particular by reducing the computation time and the number of memory accesses needed for performing the evaluation of the cost of the set of segments. The evaluation of the cost of the set of segments is also referred to herein as "the budget computation".

The initial value of the quantization level is predetermined. The initial value of the quantization level may be determined according to the following ways, where some of them can be combined:
- as a quantization level corresponding to a lossless compression, i.e. with no loss of information in the encoded image as compared with the original image before encoding;
- as a quantization level corresponding to an acceptable image quality for a given application;
- based on statistics known *a priori* based on properties of the image to be encoded, such as image resolution (e.g. FHD (1920x1080 pixels), 4K (3840x2160 pixels), etc.), image bit depth (e.g. 8, 10, or 12 bits per image sample), optionally combined with the target budget constraint;
- based on statistics determined at run-time from previous elements, e.g. previous segments, previous precincts, or previous images, said statistics being for example the quantization level found for said elements.

Generally, the quantization level is not necessarily identical for all segments. Instead, the quantization level as used herein should be interpreted as encompassing a situation where the effective quantization level of each segment in a set of segments depends on an overall parameter, i.e. the (overall) quantization level, that is adjusted individually for each segment in a manner known *a priori.* This is exemplified by the quantization and refinement mechanism as specified in the JPEG XS standard, wherein the quantization level of each band in a precinct is determined based on a pair of values, namely the precinct quantization Q[p] and the precinct refinement R[p] contained in the header of each precinct, and is adjusted based on the gain G[b] and priority P[b] of each band contained in the weights table present in the codestream header, and therefore known *a priori.*

Furthermore, when the quantization level is increased, it is not necessarily increased for all segments at the same time. Indeed, some segments may be protected by a sufficiently high gain so that the effective quantization level of these segments is not impacted, or modified, by an increase of the overall quantization level. This may also be the case when a refinement mechanism is used. The following cases may generally occur following an increase in the overall quantization level:
- increase of the effective quantization level of all segments;
- increase of the effective quantization level of some segments;
- increase of the effective quantization level of a single segment.

The order in which segments are evaluated in the budget computation step c) of the method for encoding is predetermined. Having such a predetermined order may facilitate an implementation of the method for encoding, for instance by improving the predictability of future steps of the method, thereby allowing a more efficient caching of data and/or a more efficient planning and allocation of computational resources. Generally, said predetermined order may be such that segments with a higher expected cost and/or whose cost is easier to evaluate, i.e. requires a lower computational complexity, are evaluated first. In addition, said order may be predetermined for a current image based on parameters or statistics from a previous image.

Generally, the predetermined order in which segments are evaluated in the budget computation step c) of the method for encoding may vary (or in other words be different, or be modified) for different budget computation steps c). In other words, said predetermined order may be determined in a given budget computation step c) and vary (or in other words be different, or be modified) in a further budget computation step c).

In a case where the value of the quantization level is maintained for at least some segments between two budget computation steps c), in particular between two successive steps c), the predetermined order may give priority to segments whose quantization level is maintained, i.e. is not modified, for the current step c) compared to a previous step c). Indeed, the cost of these segments is already known and therefore it does not need to be computed again. In addition, the predetermined order may also give priority to segments whose quantization level will be maintained, i.e. will not be modified, during one or more subsequent steps c). For those segments whose quantization level is not modified between two steps c), it is thus possible to reuse all or part of the cost of a segment, i.e. a result already computed in a previous step. This offers the advantage of increasing the efficiency of the budget computation step c) by reusing results that have already been computed. In order to be easily reused, said results may advantageously be stored in a memory between two budget computation steps c), in particular between two successive steps c). Said memory may be for instance a cache memory.

The predetermined order in which segments are evaluated in the budget computation step c) of the method for encoding may be based on a ratio of the expected cost of each segment divided by the computational complexity required for determining said cost. A segment with a higher ratio is evaluated before a segment with a lower ratio. In other words, segments with a higher expected cost and a lower computational complexity for determining said cost are evaluated first. For example, segments that are the biggest contributors to cost and/or the fastest to evaluate may be evaluated first. Generally, the cost of data segments may be evaluated before the cost of GCLI segments. In turn, the cost of GCLI segments may be evaluated before the cost of sign segments. Indeed, data segments typically comprise more data than (corresponding) GCLI or sign segments, so their cost is typically higher. In addition, the evaluation of the cost of a data segment may be performed based on GCLI values only. For example, on a modern computer with parallel processing capabilities, 32 GCLI values may typically be processed in parallel, with one GCLI value stored in each byte of a vector of 32 bytes (256 bits).

The evaluation of the cost of a GCLI segment requires analyzing GCLI values. In particular, the evaluation of the cost of a GCLI segment may require analyzing several GCLI coding modes. In addition, some GCLI coding modes may require taking into account GCLI values in a previous line of image coefficients. Therefore, computing the cost of a GCLI segment may require a higher computational complexity than computing the cost of a corresponding data segment. The evaluation of the cost of a GCLI segment may benefit from vectorization in a similar way as the evaluation of the cost of a data segment.

The evaluation of the cost of a sign segment requires analyzing the individual value of each coefficient of the segment, which implies reading the value of each of said coefficients from memory. Therefore, computing the cost of a sign segment may require a higher computational complexity than computing the cost of a corresponding GCLI or data segment. Let us consider the example of a group of four coefficients where the value of each coefficient is stored in 16 bits of memory and with a single GCLI value associated with the group. In this example, analyzing the sign of each coefficient of the group requires reading the value of each coefficient from memory, i.e. reading 64 bits from memory. In contrast, analyzing the GCLI of the group may be performed by reading only the single GCLI value from memory, which is typically stored in a byte, i.e. 8 bits. Therefore, this example shows that analyzing the sign of the coefficients of a group may require eight times more memory accesses than analyzing the GCLI of the group, thereby requiring a higher computational complexity.

The following further elements are also relevant for the determination of the order in which segments are evaluated in the budget computation step. The effective quantization level of some segments may be adjusted, for example according to the quantization and refinement mechanism specified in the JPEG XS standard and described hereinabove. Therefore, the cost of a segment with a lower quantization level may advantageously be evaluated before the cost of a segment with a higher quantization level. Indeed, a lower quantization level means that less data will be quantized, or removed, from the coefficients of the segment and thus that the corresponding subpacket will contain more data, i.e. the cost of the corresponding subpacket will be higher. In other words, for a given computational complexity, there is an increased probability of exceeding the target budget when evaluating the cost of a segment with a lower quantization level than when evaluating the cost of a segment with a higher quantization level. Therefore, it may be advantageous to evaluate the cost of a segment with a lower quantization level before the cost of a segment with a higher quantization level. In particular, some image components may have smaller quantization values than other. For example, in the case of an image with "Y", "Cb" and "Cr" color components, the JPEG XS standard specifies lower quantization values for coefficients from the Y component than for corresponding coefficients from the Cb and Cr components. Therefore, the cost of segments with coefficients from a less quantized image component may advantageously be evaluated before the cost of segments with coefficients from a more quantized image component. Furthermore, lower-frequency subbands typically have a lower quantization value than higher-frequency subbands. Therefore, the cost of segments with coefficients from lower-frequency subbands may advantageously be evaluated before the cost of segments with coefficients from higher-frequency subbands.

In short, the order in which segments are evaluated in the budget computation step is determined so as to achieve a balance between the computational complexity required for evaluating the cost of each segment and the expected cost of each segment. The segments requiring a lower computational complexity for computing their cost tend to be evaluated first. In addition, segments whose cost is expected to be higher also tend to be evaluated first. In other words, said order is determined so that segments with a higher expected cost and/or a lower computational complexity for determining said cost are evaluated first. Indeed, said segments are more likely to make the total cost of the set of segments exceed the target budget in a budget computation step, thereby allowing a given quantization level to be discarded more quickly and/or requiring a lower computational complexity to discard a given quantization level.

In the budget computation step c) of the method for encoding, when a cost of the set of segments is computed incrementally, it means that said cost is computed until the cost of the set of segments exceeds the target budget or until the cost of each segment of the set has been evaluated.

Preferably, the budget computation step may be stopped as soon as the target budget is exceeded, i.e. during the computation of the cost of a segment in substep c)(i) and with no need to wait for the completion of the computation of the cost of the segment in substep c)(i). In this case, the cost of the segment that is stored in the memory is a partial cost of the segment, and it may be marked as such.

More preferably, the computation of the cost of a GCLI segment may be stopped as soon as the maximum cost of said segment is reached, which corresponds to the cost of the segment in the case all GCLI are encoded in a RAW coding mode, for example with 4 bits per GCLI as specified in the JPEG XS standard.

Preferably, the memory of substep c)(ii) of the method for encoding is a cache memory. In this case, a further advantage of the present invention is to maximize the usefulness of the information contained in the cache memory by reducing the number of memory accesses and/or avoiding to read coefficients from the memory that are not needed to determine if the target budget is exceeded for the current value of the quantization level.

The inventors propose several possible embodiments comprising optional features. These embodiments may be implemented independently and/or be combined.

In an embodiment, the predetermined order for the evaluation of the cost of segments in the budget computation step c) is based on a ratio of the expected cost of each segment in the set of segments divided by the computational complexity required for determining said cost, wherein a segment with a higher such ratio is evaluated before a segment with a lower such ratio. An advantage of this embodiment is to increase the efficiency of the budget computation step c) by increasing the likelihood that the additional cost of a segment makes the total cost of the set of segments exceed the target budget, thereby allowing a given quantization level to be discarded more quickly and/or requiring a lower computational complexity to discard a given quantization level.

In an embodiment, the predetermined order for the evaluation of the cost of segments in a current budget computation step c) gives priority to a segment whose cost has been at least partially computed in a previous budget computation step c), in particular when the value of the quantization level of said segment in the current budget computation step c) is the same as in the previous budget computation step c). This embodiment offers the advantage of increasing the efficiency of the current budget computation step c) by reusing results that have already been computed.

In an embodiment, the predetermined order for the evaluation of the cost of segments in a current budget computation step c) gives priority to a segment whose cost will be, or is expected to be, at least partially reused in a further, or subsequent, budget computation step c), in particular when the value of the quantization level of said segment in the further budget computation step c) will be, or is expected to be, the same as in the current budget computation step c). This embodiment offers the advantage of increasing the efficiency of the further budget computation step c) by reusing results that have already been computed. This embodiment may be implemented independently from the previous embodiment and/or be combined with the previous embodiment.

In an embodiment, the encoded image conforms with a JPEG XS standard. In this embodiment, the method for encoding complies with the JPEG XS standard. In other words, the method for encoding produces an encoded image conform to the JPEG XS standard, i.e. decodable according to the specifications of the JPEG XS standard. In this embodiment, the portion of the encoded image preferably corresponds to a plurality of adjacent precincts, more preferably to a single precinct, so as to allow a low-latency encoding of the at least one portion of the original image. A GCLI as used herein corresponds to a bitplane count in the JPEG XS standard. A subband as used herein corresponds to a band in the JPEG XS standard. A group of coefficients as used herein may correspond to a code group in the JPEG XS standard. However, packets and subpackets as used herein designate a broader concept as the one specified in the JPEG XS standard.

In an embodiment, the encoded image comprises at least one sign subpacket. A sign subpacket allows signs of image coefficients represented in sign-magnitude representation to be encoded separately from the magnitude of said coefficients. Sign subpackets according to this embodiment are taken into account in the incremental evaluation scheme as respective sign segments. An advantage of this embodiment is to improve the efficiency of the encoding, i.e. the amount of information from the original image that is preserved in the encoded image for a given target size of the encoded image.

The method for encoding of the invention is particularly advantageous in cases where the encoded image comprises one or more sign subpackets, which requires computing the cost of one or more corresponding sign segments in the budget computation step c). Indeed, said method may allow a given value of the quantization level to be discarded without having to evaluate the cost of all segments in the set of segments, and in particular without having to evaluate the cost of sign segments. This allows the computational complexity of the budget computation step c) to be reduced. Indeed, the evaluation of the cost of a sign segment requires a high computational complexity since it requires analyzing the individual value of each coefficient of the segment. Therefore, it is advantageous to be able to discard a value of the quantization level without having to evaluate the cost of all segments in the set of segments, and in particular without having to evaluate the cost of sign segments.

Generally, the incremental evaluation scheme performed in the budget computation step c) may be performed only for a subset of the segments, i.e. only for some segments in the set of segments. In particular, said incremental evaluation scheme may be performed only for the sign segments. The computational complexity of the evaluation of the cost of the set of segments may be reduced even in the case where the incremental evaluation scheme is performed only for a subset of the segments.

In an embodiment, the entropy encoding comprises a quantization operation performed by truncation of bitplanes of coefficients. Performing a quantization operation by simply truncating, or removing, a number of least significant bitplanes of coefficients allows reducing the computational complexity of the quantization operation. In this case, the quantization level corresponds to a truncation level, i.e. the number of least significant bitplanes truncated from the coefficients. A quantization level may be denoted herein as "t". A truncation level may be specified by the so-called "Greatest Trimmed Line Index" (GTLI), which indicates a number of least significant bitplanes truncated from the coefficients.

In an embodiment, after a suitable value of the quantization level has been determined, the method for encoding further comprises a refinement step before entropy encoding the set of image coefficients, wherein the suitable value of the quantization level is modified for at least one segment in the refinement step. Preferably, the suitable value of the quantization level is modified only for a subset of the segments, i.e. only for some segments in the set of segments, and not for all segments in the set of segments. Preferably, the suitable value of the quantization level is decreased for at least one segment in the refinement step. A suitable value of the quantization level according to this embodiment is a value for which the cost of the portion of the encoded image does not exceed the target budget. In the refinement step according to this embodiment, a new budget computation step is performed, in which the quantization level is modified only for some segments or even for a single segment. Therefore, the computation of the cost of the segments must be performed again only for a subset of the segments and not for all segments in the set of segments. Therefore, the refinement step of this embodiment is not equivalent to a binary search, in which the quantization level of all segments may generally be increased or decreased. In addition, the refinement step of this embodiment is an optional optimization of the method for encoding of the invention, which offers the advantage of increasing the amount of information kept in the encoded image after quantization of the image coefficients.

The evaluation of the cost of a segment may be split into two parts: a first part that is easier to compute, i.e. requires a lower computational complexity, and a second part that is more complex to compute, i.e. requires a higher computational complexity. The second part may be seen as an increment, or a complement, of the first part. For instance, the first part may be a lower bound of an actual cost and the second part may be the difference between the actual cost and the lower bound of the first part. In another example, the first part may be an upper bound of an actual cost and the second part may be the difference between the upper bound of the first part and the actual cost.

In an embodiment, the cost of at least one segment is estimated using a lower bound of the cost of said segment. Computing a lower bound of the cost of a segment may be easier to compute, i.e. require less computational complexity, than computing the actual cost of the segment, as described hereinabove. Therefore, an advantage of this embodiment is to reduce the computational complexity of the budget computation step.

In an embodiment, the cost of at least one segment is estimated using an upper bound of the cost of said segment. Computing an upper bound of the cost of a segment may be easier to compute, i.e. require less computational complexity, than computing the actual cost of the segment, as described hereinabove. Therefore, an advantage of this embodiment is to reduce the computational complexity of the budget computation step. This embodiment is preferably performed in a refinement step as described hereinabove, wherein the suitable value of the quantization level is decreased for at least one segment in the refinement step.

In an embodiment, the substep c)(i) of the method for encoding further comprises reusing a count of the number of significant groups of coefficients computed for a lower value of the quantization level when computing the cost of the current segment for the current value of the quantization level. A significant group of coefficients is a group for which the bitplane count is higher than the quantization level. The coefficients referred to in this embodiment are the coefficients belonging to the current segment. A number of coefficients are grouped together to form a group, for instance by groups of four coefficients as specified in the JPEG XS standard. For the sake of conciseness, a "count of the number of significant groups of coefficients" for a given quantization level value may also be referred to herein as a "significant count" for the quantization level value. This embodiment allows the computational complexity of the computation of the cost of the current segment to be reduced by reusing the previously computed count of the number of significant groups.

Advantageously, the count of the number of significant groups of coefficients may be stored in a memory in order to be easily reused. In this case, the computation of the cost of the current segment for the current value of the quantization level comprises the following steps:
- in a previous substep c)(i), computing a count of the number of significant groups of coefficients for a lower value of the quantization level;
- in a previous substep c)(i), storing said count in a memory;
- in the current substep c)(i), reusing said count from the memory when computing the cost of the current segment for the current value of the quantization level.

This embodiment allows reducing the computational complexity of computing the cost of a data segment. Indeed, the significant count SC(t) for a given quantization level value t can be used to compute the cost of a data segment for a higher quantization level value according to the following equations, thereby reducing the computational complexity of computing of the cost of said data segment.
The cost, i.e. the number of bits, C_{DATA}(t) of a data segment comprising N_{CG} groups of coefficients can be computed for a quantization level value t according to the following formula: ${C}_{DATA} \left(t\right) = {\sum }_{i = 0}^{{N}_{CG} - 1} \left({N}_{g}∗max \left({GCLI}_{i}-t,0\right)\right) .$

The significant count SC(t) of said coefficients can be computed for the quantization level value t according to the following formula: $SC \left(t\right) = {\sum }_{i = 0}^{{N}_{CG} - 1} 1 \left[{GCLI}_{i}>t\right] .$

The notation 1[...] in the above equation should be interpreted as having a value of one when the Boolean condition in square brackets is true and a value of zero otherwise. Therefore, SC(t) is equal to the number of significant groups, i.e. all groups i for which GCLIᵢ > t.
The cost C_{DATA}(t) can be computed for a quantization level value t based on the cost C_{DATA}(t-1) and the significant count SC(t-1) for a lower quantization level value t-1 according to the following formulas: ${C}_{DATA} \left(t=0\right) = {\sum }_{i = 0}^{{N}_{CG} - 1} \left({N}_{g}∗{GCLI}_{i}\right)$ ${C}_{DATA} \left(1\right) = {C}_{DATA} \left(0\right) - {N}_{g} ∗ SC \left(0\right)$ ${C}_{DATA} \left(2\right) = {C}_{DATA} \left(1\right) - {N}_{g} ∗ SC \left(1\right)$ ${C}_{DATA} \left(t\right) = {C}_{DATA} \left(t-1\right) - {N}_{g} ∗ SC \left(t-1\right)$

The idea behind the above formula is that the cost of a data segment C_{DATA}(t) for a quantization level t is equal to the cost of the data segment C_{DATA}(t-1) for a lower quantization level t-1 reduced by a number of bits equal to the number of groups SC(t-1) that were significant for the lower quantization level t-1, multiplied by the number N_{g} of coefficients in a group.
It is generally possible to compute a cost C_{DATA}(t) for an initial quantization level value t larger than zero by applying either the chain of formulas above or directly the following formula: ${C}_{DATA} \left(t\right) = {\sum }_{i = 0}^{{N}_{CG} - 1} \left({N}_{g}∗max\left({GCLI}_{i}-t,0\right)\right) .$

The significant count SC(t) computed during the computation of the cost of a data segment can be reused for computing the cost of a corresponding GCLI segment in the "no prediction" mode, as well as a lower bound and an upper bound of the cost of a corresponding sign segment, thereby reducing the computational complexity of said computations, as detailed hereinbelow.
Moreover, if a significant count SC(t) is equal to zero for a quantization level t, the significant count SC(t+1) for a quantization level t+1 will also be equal to zero. This allows the computational complexity of the evaluation of the cost of segments for the quantization level values t and above to be reduced according to the invention, wherein the cost of segments is evaluated iteratively for increasing values of the quantization level in successive budget computation steps.

This embodiment also allows reducing the computational complexity of computing the cost of a GCLI segment in the "no prediction" mode. The number of bits of a unary coded GCLIᵢ value in the "no prediction" mode for a quantization level t is equal to max(GCLIᵢ - t + 1, 1). The cost C_{GCLI,nopred}(t) of a segment of unary coded GCLI values in the "no prediction" mode can be computed for a quantization level t based on the cost C_{GCLI,nopred}(t-1) and the significant count SC(t-1) for a lower quantization level t-1 in a similar way as for computing the cost C_{DATA}(t) and according to the following formulas: ${C}_{GCLI , nopred} \left(t=0\right) = {\sum }_{i = 0}^{{N}_{CG - 1}} max \left({GCLI}_{i}-t+1,1\right) = {\sum }_{i = 0}^{{N}_{CG} - 1} \left({GCLI}_{i}+1\right) = \left({\sum }_{i = 0}^{{N}_{CG} - 1} {GCLI}_{i}\right) + {N}_{CG}$ ${C}_{GCLI , nopred} \left(1\right) = {C}_{GCLI , nopred} \left(0\right) - SC \left(0\right)$ ${C}_{GCLI , nopred} \left(2\right) = {C}_{GCLI , nopred} \left(1\right) - SC \left(1\right)$ ${C}_{GCLI , nopred} \left(t\right) = {C}_{GCLI , nopred} \left(t-1\right) - SC \left(t-1\right)$

It is generally possible to compute a cost C_{GCLI,nopred}(t) for an initial quantization level value t larger than zero by applying either the chain of formulas above or directly the following formula: ${C}_{GCLI , nopred} \left(t\right) = {\sum }_{i = 0}^{{N}_{CG} - 1} max \left({GCLI}_{i}-t+1,1\right) = {\sum }_{i = 0}^{{N}_{CG} - 1} \left(max\left({GCLI}_{i}-t,0\right)+1\right) .$

In an embodiment, the cost C_{DATA}(t) of a data segment comprising N_{CG} groups of N_{g} coefficients is computed for a quantization level value t according to the following formula, wherein SC(t-1) designates a count of the number of significant groups for a quantization level value t-1: ${C}_{DATA} \left(t\right) = {C}_{DATA} \left(t-1\right) - {N}_{g} ∗ SC \left(t-1\right) .$ An advantage of this embodiment is to reduce the computational complexity of the computation of the cost C_{DATA}(t). Indeed, starting from a known value of C_{DATA}(t-1), computing SC(t-1) is enough for computing the value of C_{DATA}(t) according to the above formula. In addition, the computed quantity SC(t-1) may advantageously be reused for computing other costs.

In an embodiment, the cost C_{GCLI,nopred}(t) of a segment of unary coded GCLI values in the "no prediction" mode comprising N_{CG} groups of N_{g} coefficients is computed for a quantization level value t according to the following formula, wherein SC(t-1) designates a count of the number of significant groups for a quantization level value t-1: ${C}_{GCLI , nopred} \left(t\right) = {C}_{GCLI , nopred} \left(t-1\right) - SC \left(t-1\right) .$

An advantage of this embodiment is to reduce the computational complexity of the computation of the cost C_{GCLI,nopred}(t). Indeed, starting from a known value of C_{GCLI,nopred}(t-1), computing SC(t-1) is enough for computing the value of C_{GCLI,nopred}(t) according to the above formula. In addition, the computed quantity SC(t-1) may advantageously be reused for computing other costs.

The significant count SC(t) for a given quantization level value t can be used to compute a lower bound and an upper bound of the cost C_{SIGN}(t) of a sign segment according to the following formulas: ${C}_{SIGN} \left(t\right) \geq 1 ∗ SC \left(t\right) \left(lower bound\right) ;$ ${C}_{SIGN} \left(t\right) \leq {N}_{g} ∗ SC \left(t\right) \left(upper bound\right) .$ Indeed, for each significant group there is at least one sign bit and at most a number of sign bits equal to the number N_{g} of coefficients in a group.

In an embodiment, a lower bound of the cost C_{SIGN}(t) of a sign segment comprising N_{CG} groups of N_{g} coefficients is computed for a quantization level value t according to the following formula, wherein SC(t) designates a count of the number of significant groups for a quantization level value t: ${C}_{SIGN} \left(t\right) \geq 1 ∗ SC \left(t\right) .$

An advantage of this embodiment is to reduce the computational complexity of the computation of the lower bound of the cost C_{SIGN}(t). In addition, the computed quantity SC(t) may advantageously be reused for computing other costs.

In an embodiment, an upper bound of the cost C_{SIGN}(t) of a sign segment comprising N_{CG} groups of N_{g} coefficients is computed for a quantization level value t according to the following formula, wherein SC(t) designates a count of the number of significant groups for a quantization level value t: ${C}_{SIGN} \left(t\right) \leq {N}_{g} ∗ SC \left(t\right) .$ An advantage of this embodiment is to reduce the computational complexity of the computation of the upper bound of the cost C_{SIGN}(t). In addition, the computed quantity SC(t) may advantageously be reused for computing other costs.

Generally, computing a lower bound or an upper bound of the cost C_{SIGN}(t) of a sign segment is advantageous because it may allow a given value of the quantization level to be discarded without having to evaluate the actual cost of the sign segment. Indeed, the evaluation of the cost of a sign segment requires a high computational complexity since it requires analyzing the individual value of each coefficient of the segment.

In an embodiment, the substep c)(i) of the method for encoding further comprises reusing a cost of a corresponding segment of a different type when computing the cost of the current segment for the current value of the quantization level. This embodiment allows the computational complexity of the computation of the cost of the current segment to be reduced by reusing the previously computed cost of said corresponding segment. For example, the cost of a GCLI segment may be computed based on the cost of a corresponding data segment. In this case, the predetermined order in which segments are evaluated in the budget computation step c) of the method for encoding may be determined so that at least some data segments are evaluated before corresponding GCLI segments. This allows the computational complexity of the computation of the cost of said corresponding GCLI segments to be reduced by reusing the previously computed cost of said data segments.

In an embodiment, the cost C_{GCLI,nopred}(t) of a segment of unary coded GCLI values in the "no prediction" mode comprising N_{CG} groups of N_{g} coefficients is computed for a quantization level value t according to the following formula, wherein C_{DATA}(t) designates the cost of a data segment corresponding to the GCLI segment, i.e. sharing the same subset of coefficients, for the quantization level value t: ${C}_{GCLI , nopred} \left(t\right) = {\sum }_{i = 0}^{{N}_{CG} - 1} \left(max\left({GCLI}_{i}-t,0\right)+1\right) = \frac{{C}_{DATA} \left(t\right)}{{N}_{g}} + {N}_{CG} .$ An advantage of this embodiment is to reduce the computational complexity of the computation of the cost C_{GCLI,nopred}(t). Indeed, according to the above formula, C_{GCLI,nopred}(t) can be simply and directly computed from a previously computed value C_{DATA}(t).

In an embodiment, costs that are independent from the value of the quantization level are subtracted from the target budget before running the budget computation step c). Said costs are also simply referred to herein as "quantization-independent costs", or "fixed costs". All quantization-independent costs are taken into account, i.e. subtracted from the target budget, before starting to evaluate the cost of segments, i.e. before running the budget computation step (or steps). Herein, "all quantization-independent costs" means such costs for all segments, and not only for a single segment. This embodiment allows the computational complexity of the budget computation step to be reduced. Indeed, the target budget is reduced through the subtraction of the quantization-independent costs, thereby reducing the number of segments whose cost is to be computed in the budget computation step in order to reach the target budget. Quantization-independent cost typically correspond to fixed cost known before running the budget computation step. Here are some examples of quantization-independent costs:
- fixed cost of headers, which depends e.g. on the number of (sub)packets, which in turn depends on the encoding profile of the encoded image;
- fixed cost of significance flags, which depends e.g. on the width of the original image. Significance flags are flags signaling that a number of consecutive GCLI values are null or that a number of consecutive GCLI prediction residuals are null. Herein, said number is denoted by N_{S}. Parameter N_{S} designates the number of consecutive GCLI values in a significance group, i.e. corresponding to a single significance flag. For example, parameter N_{S} may be equal to eight. According to the JPEG XS standard, significance flags are packed in a significance subpacket. In particular, the cost of a significance subpacket does not depend on the value of a quantization level. Significance flags and significance subpackets have thus a fixed cost. A significance flag may also be referred to as a "run mode" flag.

In particular, the cost C_{GCLI,nopred_sig}(t) of a segment of unary coded GCLI values in the "no prediction" mode when significance flags are activated may be computed as detailed hereinbelow. In the cases below, it is considered that a significance flag indicates whether or not a group of N_{S} consecutive GCLI values are significant. The function NonSigRunGroups(t) indicates the number of non-significant groups of N_{S} consecutive GCLI values for a quantization level value t. Therefore, the cost C_{GCLI,nopred_sig}(t) may be computed according to the following formula, wherein the term "N_{CG}/N_{S}" is a fixed cost of the significance flags: ${C}_{GCLI , nopred _ sig} \left(t\right) = {C}_{GCLI , nopred} \left(t\right) - \left({N}_{S}∗NonSigRunGroups\left(t\right)\right) + \left(\frac{{N}_{CG}}{{N}_{S}}\right) .$

Herein, a "variable cost" is a cost that depends on, or varies with, a quantization level value. In other words, the variable cost of a segment is the total cost of the segment from which the fixed costs, or in other words the quantization-independent costs, have been subtracted. For example, the variable cost C*_{GCLI,nopred_sig}(t) of a segment of unary coded GCLI values in the "no prediction" mode when significance flags are activated may be computed from the total cost C_{GCLI,nopred_sig}(t) of said segment according to the following formula: ${C}_{GCLI , nopred _ sig}^{∗} \left(t\right) = {C}_{GCLI , nopred _ sig} \left(t\right) - \left(\frac{{N}_{CG}}{{N}_{S}}\right) .$

In an embodiment, when the cost of a data segment is null, the computation of the cost of the corresponding GCLI and sign segments is skipped in the budget computation step. The cost of a data segment is null for a quantization level t when all groups in the segment are non-significant, i.e. when the GCLI value of each group in the segment is not higher than the quantization level t. In this case, the cost of the corresponding GCLI segment is minimal, for example N_{g} bits in the "RAW" mode and one bit in the "no prediction" or "vertical prediction" modes, and the cost of the corresponding sign segment is null. Therefore, in this case, the cost of the corresponding GCLI and sign segments are known *a priori* and thus need not be computed in the budget computation step, thereby reducing the computational complexity of the budget computation step.

In an embodiment, coefficients from non-significant groups are not read from memory when computing the cost of a sign segment in the budget computation step. Indeed, said coefficients are known to be null after quantization and therefore their sign will not be packed in the codestream. It is only required to read the GCLI value of said groups to know that they are not significant, thereby reducing the computational complexity of the computation.

Generally, it is advantageous to read GCLI values rather than coefficients from memory when computing the cost of a segment. Indeed, reading only a GCLI from memory rather than the coefficients of the group corresponding to the GCLI reduces the number of bits read from memory. As an example, let us consider a GCLI coded on 4 bits and covering a group of 4 coefficients, each coefficient being coded on 16 bits. Reading the GCLI instead of the 4 coefficients of 16 bits each therefore reduces the number of bits read from memory by a factor of (4*16)/4 = 16. Note that this factor may vary depending on the number of coefficients comprised in a group corresponding to a GCLI as well as on the number of bits needed to code a GCLI and a coefficient. Values in the above example correspond to a typical case, in particular to a case as specified in the JPEG XS standard.

In an embodiment, the method for encoding operates according to a constant data rate encoding scheme. In this embodiment, the target budget is identical for all portions of the encoded image.

Herein, a "compression ratio" designates a ratio of the size of the original image divided by the size of the encoded image. For instance, if the encoded image is half the size of the original image, the compression ratio is equal to two.

In an embodiment, the method for encoding operates according to a compression ratio of at least two. Therefore, in this embodiment, the size of the encoded image is at most half the size of the original image.

According to a second aspect of the invention, there is provided a computer program comprising instructions which, when the program is executed by a computer, cause the computer to carry out a method for encoding according to the invention.

In an embodiment, there is provided a non-transitory recording medium having recorded therein a computer program that causes a processor to execute a method for encoding according to the invention.

According to a third aspect of the invention, there is provided an encoder comprising a processor and a memory and configured for encoding at least one portion of an original image into a corresponding portion of an encoded image according to the method for encoding of the invention.

All the possible embodiments and advantages of the first aspect of the invention apply *mutatis mutandis* to other aspects of the invention.

### Brief description of the figures

For a better understanding of the present invention, reference will now be made, by way of example, to the accompanying drawings in which:
- Fig. 1 illustrates a wavelet transform of an image with exemplary two vertical and five horizontal decompositions;
- Fig. 2 illustrates an organization of image coefficients into precincts;
- Fig. 3 illustrates a principle of GCLI encoding of a group of image coefficients;
- Fig. 4 illustrates the determination of a quantization level according to an embodiment;
- Fig. 5 schematically represents an encoder according to an embodiment.

The figures are not drawn to scale. Generally, identical or analogous elements are denoted by the same reference numerals or letters in the figures.

### Detailed description of some embodiments of the invention

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn to scale for illustrative purposes.

Use of the verb "to comprise", as well as the respective variants and conjugations, does not exclude the presence of elements other than those stated. Use of the article "a", "an" or "the" preceding an element does not exclude the presence of a plurality of such elements.

The terms "first", "second", "third" and the like, in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, embodiments referred to as "preferred" are to be construed as exemplary manners in which the invention may be implemented rather than as limiting the scope of the invention.

Herein, a "processor" generally designates a device able to execute computer instructions, such as for example a (micro)processor for a computer, which is also known as a central processing module (CPU), or a graphics processing module (GPU). A register of a processor, also referred to herein as a "processor register", is a high-speed memory built into a processor for quick data access. A processor register is an example of a cache memory.

Cache memories may be organized in several levels, a lower-level cache memory being faster, but smaller, than a higher-level cache memory. When a data is not found in a lower-level cache memory, a cache miss occurs and the data needs to be retrieved from a higher-level, and therefore slower, cache memory. The level of a cache memory may be designated by a number, a lower number designated a lower level. As an example, a modern processor may comprise three levels of cache memories, respectively denoted as "Level 1", "Level 2", and "Level 3" cache memories, or L1, L2, and L3 caches for short.

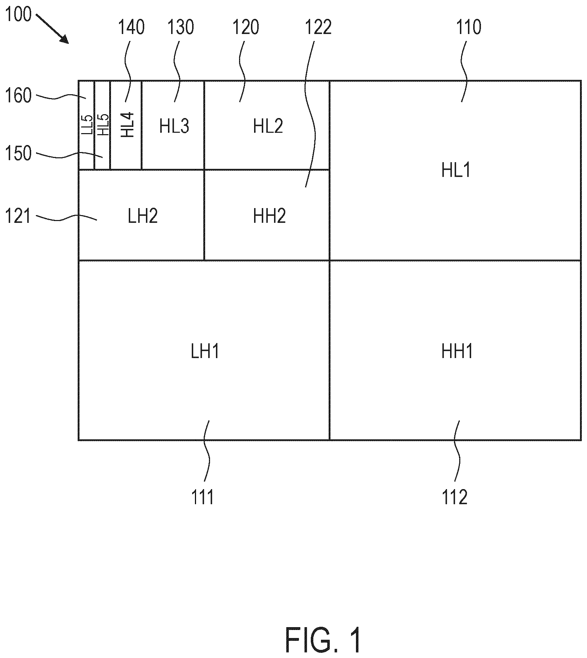

Fig. 1 schematically represents an exemplary decomposition of an image into subbands in a cascade of wavelet-type filter operations. In the example of Fig. 1, two vertical and five horizontal wavelet decompositions have been applied to the image for producing the decomposed image 100. The decomposed image 100 comprises so-called subbands 110-160. Generally, the wavelet-type filter operations may comprise any wavelet-type filter. In the particular case illustrated on Fig. 1, the cascade of wavelet-type filter operations applied on the image for obtaining the decomposed image 100 comprises two wavelet-type filter operations of the LeGall 5/3 type applied in a vertical direction and five wavelet-type filter operations of the LeGall 5/3 type applied in a horizontal direction. In said cascade of wavelet-type filter operations, a wavelet-type filter operation applied in a vertical direction is followed by a wavelet-type filter operation applied in a horizontal direction. Similarly, a wavelet-type filter operation applied in a horizontal direction is followed by a wavelet-type filter operation applied in a vertical direction, unless there are no more such vertical operation to be performed, in which case the wavelet-type filter operation applied in a horizontal direction is followed by another wavelet-type filter operation applied in a horizontal direction.

On Fig. 1, the coefficients resulting from the cascade of wavelet-type filter operations have been grouped together based on the type of the subband they belong to. Other ways of grouping the coefficients are possible. The types of the subbands are listed in Table 1. The subband frequency type in the horizontal or vertical direction depends on the filtering type the subband results from. A subband with a high frequency type in a horizontal or vertical direction results from a high-pass filtering in the corresponding direction. Similarly, a subband with a low frequency type in a horizontal or vertical direction results from a low-pass filtering in the corresponding direction.

**Table 1 - Types of the subbands in Fig. 1**

| Reference sign | Subband frequency type in the horizontal direction | Subband frequency type in the vertical direction | Subband type |
|---|---|---|---|
| 110 | High | Low | HL1 |
| 111 | Low | High | LH1 |
| 112 | High | High | HH1 |
| 120 | High | Low | HL2 |
| 121 | Low | High | LH2 |
| 122 | High | High | HH2 |
| 130 | High | Low | HL3 |
| 140 | High | Low | HL4 |
| 150 | High | Low | HL5 |
| 160 | Low | Low | LL5 |

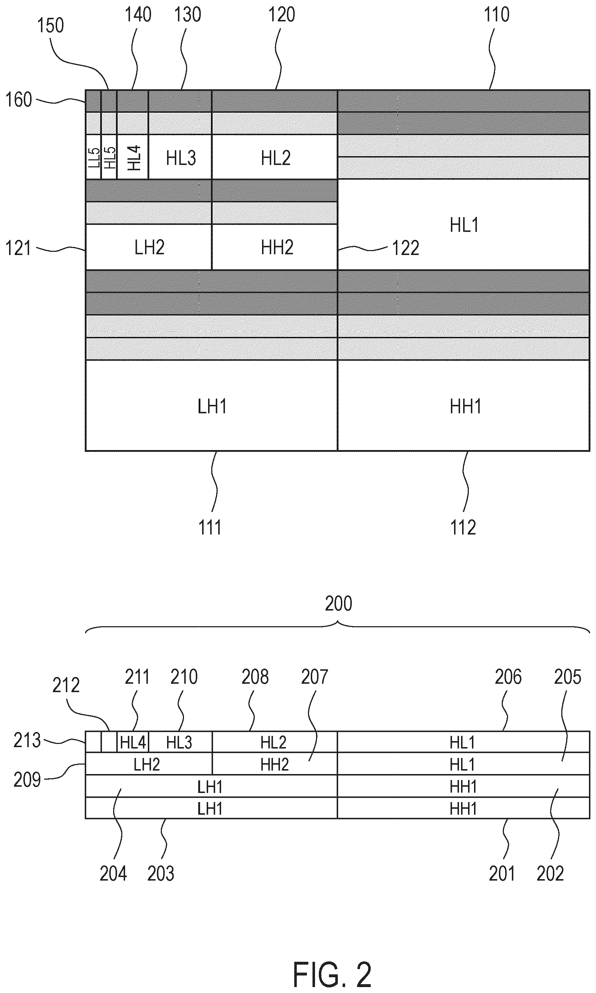

The coefficients of the frequency transform depicted in Fig. 1 are organized in so-called precincts as depicted in Fig. 2. A precinct groups all coefficients from different subbands and belonging to a same spatial region in the image.

The upper portion of Fig. 2 illustrates the distribution of the individual precincts within the individual subbands 110 to 160 illustrated in Fig. 1. Dark grey areas indicate coefficients belonging to a first precinct. Light grey areas indicate coefficients belonging to a second precinct.

Typically, a precinct defines a rectangular spatial area having, for example, the same width of the image, i.e. a number of columns equal to the number of samples in a line of image, and a height equal to a number of lines. The height of a precinct is preferably equal to a number of lines that can be divided by two, more preferably equal to a number of lines that is an integer power of two.

Particularly, the lower portion of Fig. 2 illustrates a precinct 200 that comprises two lines of subband HH1, indicated as 201 and 202, two lines of subband LH1 indicated as 203 and 204, and two lines of subband HL1 indicated as 205 and 206. The precinct 200 further comprises a single line of subband HH2 indicated as 207, a single line of subband HL2 indicated as 208, and a single line of subband LH2, indicated as 209. The precinct 200 further comprises a single line of subband HL3 indicated as 210, a single line of subband HL4 indicated as 211, a single line of subband HL5 indicated as 212, and a single line of subband LL5 indicated as 213. The precinct 200 may correspond for instance to the dark grey areas of the upper portion of Fig. 2, or to the light grey areas of the upper portion of Fig. 2. The total number of precincts that are used for an image depends on the number of lines of the image and how many lines are included within a precinct.

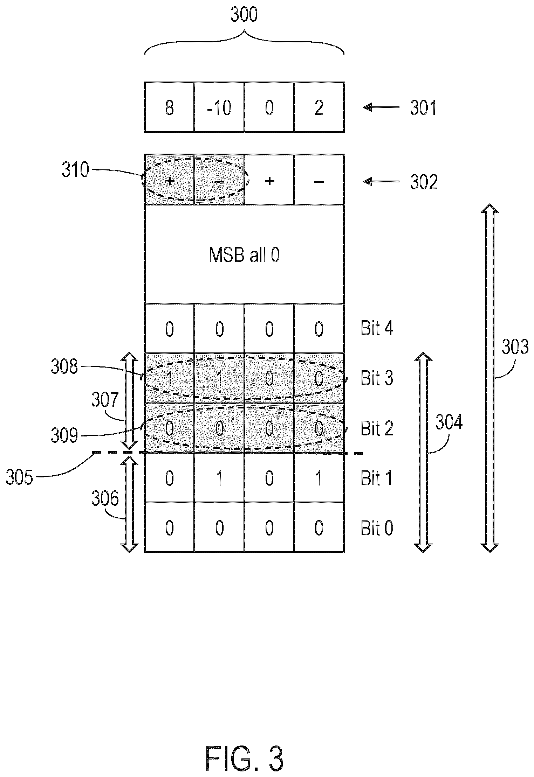

Fig. 3 illustrates a principle of GCLI encoding of a group of image coefficients. A group 300 comprising a number of (consecutive) coefficients 301 is represented in sign-magnitude representation, with reference 302 designating the signs of the coefficients 301 and reference 303 designating the magnitude of the coefficients 301 in binary representation.

The largest coefficient in the group determines the number of active bitplanes. A bitplane is called active, if at least one coefficient bit of the bitplane itself or any previous, i.e. more significant, bitplane is unequal to zero. The number of active bitplanes is given by the so-called GCLI value (Greatest Coded Line Index). A GCLI value of zero means that no bitplanes are active, and hence the complete coefficient group is zero. The GCLI of the group 300 is indicated by reference 304 in Fig. 3. Said GCLI corresponds to the four least significant bitplanes.

In a lossy encoding, coefficients may be quantized in a quantization operation. Said quantization operation may be performed by truncation, i.e. with a quantization factor being a power of two, so that entire bitplanes are truncated, i.e. removed, from the magnitude of the coefficients. When a quantization operation is performed by truncation of bitplanes of coefficients, the quantization level becomes a truncation level. A truncation level may be specified by the so-called "Greatest Trimmed Line Index" (GTLI), which indicates a number of least significant bitplanes truncated from the coefficients. The GTLI may also be referred to as a "truncation point". A GTLI equal to zero corresponds to no truncation. The active bitplanes remaining after the truncation are also referred to herein as "remaining bitplanes". Fig. 3 illustrates a GTLI 305 equal to two, i.e. two bitplanes 306 are truncated, so that two significant bitplanes 307 remain after the truncation. In addition, after the truncation, the two rightmost coefficients are no longer significant, i.e. all their remaining bits are equal to zero after the truncation.

The remaining bitplanes 307 may be transmitted to a decoder. For instance, bitplane 308 may be transmitted to the decoder first, followed by bitplane 309. Said bitplanes 308 and 309 may be transmitted to the decoder in a data subpacket.

In order to enable correct decoding, the decoder needs to know the number of remaining/transmitted bitplanes for each group of coefficients, which is signaled by transmitting the GCLI of each group to the decoder along with the remaining bitplanes. The GCLI values may be entropy encoded so as to reduce the number of bits needed to signal them, as described below. Entropy encoded GCLI values may be transmitted to the decoder in a GCLI subpacket.

In addition, signs of the coefficients may be transmitted along with the remaining bitplanes in a data subpacket. Advantageously, only signs of significant, i.e. non-zero, coefficients are transmitted, since the sign of a zero coefficient is not needed to reconstruct this coefficient. Alternatively, signs may be transmitted separately to the decoder in a sign subpacket. In the example of Fig. 3, signs 310 of significant coefficients after truncation may be transmitted to the decoder either with the bitplanes 308 and 309 in a data subpacket or separately in a sign subpacket.

Different methods, or "coding modes", are known to encode the GCLI values efficiently. In a first coding mode, also referred to herein as a "RAW mode", the GCLI value is transmitted in its raw binary representation. For example, a GCLI value ranging from 0 to 15 may be transmitted on four bits, as illustrated in Table 2.

**Table 2 - RAW coding mode for a GCLI value**

| GCLI value | Coded value |
|---|---|
| 0 | 0000 |
| 1 | 0001 |
| 2 | 0010 |
| 3 | 0011 |
| etc. | etc. |

In a second coding mode, also referred to herein as an "unsigned unary coding mode", the GCLI value is coded in a variable length unsigned unary code without prediction as represented in Table 3. This second coding mode is also referred to herein as the "no prediction mode", since the value of the GCLI is encoded without prediction from another value.

**Table 3 - Unsigned unary coding mode for a GCLI value**

| GCLI value | Coded value |
|---|---|
| 0 | 0 |
| 1 | 10 |
| 2 | 110 |
| 3 | 1110 |
| etc. | etc. |

In contrast, in a third coding mode, a GCLI value may also be encoded based on the value of the GCLI of another group of coefficients, more specifically a vertically neighboring group of coefficients. This third coding mode is also referred to herein as the "vertical prediction mode".

The third coding mode works as follows. Let G₁ and G₂ be two vertically neighboring groups of coefficients, each group comprising a number N_{g} > 1 of coefficients. Let G₂ be the coefficient group to be encoded. Let GCLI(Gᵢ) designate the GCLI of a group Gᵢ of coefficients and let GTLI(Gᵢ) designate the GTLI, i.e. truncation level, applied to a group Gᵢ of coefficients. Then, GCLI(G₂) can be signaled to the decoder by transmitting a prediction residual *δ* to the decoder, computed according to the following equation: $δ = \left\{\begin{matrix}max \left(GCLI\left({G}_{2}\right),GTLI\left({G}_{2}\right)\right) - max \left(GCLI\left({G}_{1}\right),GTLI\left({G}_{2}\right)\right) if GCLI \left({G}_{1}\right) > GTLI \left({G}_{1}\right) \\ max \left(GCLI\left({G}_{2}\right),GTLI\left({G}_{2}\right)\right) - GTLI \left({G}_{2}\right) otherwise\end{matrix}\right.$ The prediction residual *δ* may be coded in a variable length unsigned unary code in the same way as in the second coding mode (see Table 3).

The decoder recovers GCLI(G₂) by computing $GCLI ′ \left({G}_{2}\right) = δ + \left\{\begin{matrix}max \left(GCLI\left({G}_{1}\right),GTLI\left({G}_{2}\right)\right) if GCLI \left({G}_{1}\right) > GTLI \left({G}_{1}\right) \\ GTLI \left({G}_{2}\right) otherwise\end{matrix}\right.$ $GCLI \left({G}_{2}\right) = \left\{\begin{matrix}GCLI ′ \left({G}_{2}\right) if GCLI ′ \left({G}_{2}\right) > GTLI \left({G}_{2}\right) \\ 0 otherwise\end{matrix}\right.$

Table 4 provides an example of a predetermined order for evaluating the cost of segments in the budget computation step c) according to an embodiment of the invention. This example is given in the case of a FHD 4:4:4 image which has been applied a DWT decomposition. A FHD 4:4:4 image is an image with a resolution of 1920x1080 pixels and comprising three image components, wherein each image component has the same resolution as the image. The DWT decomposition of this example consists of two vertical and five horizontal DWT decompositions, resulting in the subbands 110-160 as illustrated in Fig. 1. Subband types in Table 4 correspond to the type of subbands 110-160 in Fig. 1 and Fig. 2 and also to subband types in Table 1.

The first column of Table 4 ("Component") indicates the type of image component (Y, Cb, or Cr). The second column ("Subband type") indicates the type of the subbands in each image component. The third column ("Subband width") indicates the width of the subbands as a number of image coefficients. The fourth column ("Gain") indicates a gain value for each subband. This gain value refers to the quantization and refinement mechanism as described hereinbefore, in which the quantization level is adjusted individually for each segment in a manner known *a priori.* A larger gain indicates that the coefficients of the corresponding subband are shifted upwards by a number of bits equal to the value of the gain, i.e. multiplied by a value equal to two to the power of the gain value (= 2^gain). This is equivalent to dividing the value of the quantization level of the subband by 2^gain. In other words, a larger gain corresponds to a lower quantization level for the subband.

The fifth and rightmost column of Table 4 ("Segment cost evaluation order") indicates the predetermined order of this example. This column is divided in three sub-columns for data, GCLI, and sign segments respectively. The numbers in these sub-columns indicate the order in which segments are evaluated, whose coefficients correspond to the image component of the first column and the subband type of the second column, and whose type corresponds to the sub-column (data, GCLI, or sign), a lower number indicating that the corresponding segment is evaluated first. There is a total of 90 segments in this example: 3 image components * 10 subbands in each image component * 3 segments types for each subband. The segment cost evaluation order index starts from 0 for the first segment to be evaluated and goes until 89, the last segment to be evaluated.

**Table 4 - Example of predetermined segment cost evaluation order**

| Component | Subband type | Subband width (FHD 4:4:4) | Gain | Segment cost evaluation order | | |
|---|---|---|---|---|---|---|
| | | | | DATA | GCLI | SIGN |
| | LL5 | 60 | 8 | 0 | 30 | 60 |
| | HL5 | 60 | 7 | 1 | 31 | 61 |
| | HL4 | 120 | 7 | 2 | 32 | 62 |
| | HL3 | 240 | 6 | 3 | 33 | 63 |
| Y | HL2 | 480 | 5 | 6 | 36 | 66 |
| | LH2 | 480 | 5 | 7 | 37 | 67 |
| | HH2 | 480 | 4 | 12 | 42 | 72 |
| | HL1 | 960 | 3 | 15 | 45 | 75 |
| | LH1 | 960 | 3 | 16 | 46 | 76 |
| | HH1 | 960 | 2 | 21 | 51 | 81 |
| | LL5 | 60 | 6 | 4 | 34 | 64 |
| | HL5 | 60 | 5 | 8 | 38 | 68 |
| | HL4 | 120 | 5 | 9 | 39 | 69 |
| | HL3 | 240 | 4 | 13 | 43 | 73 |
| Cb | HL2 | 480 | 3 | 17 | 47 | 77 |
| | LH2 | 480 | 3 | 18 | 48 | 78 |
| | HH2 | 480 | 1 | 22 | 52 | 82 |
| | HL1 | 960 | 1 | 23 | 53 | 83 |
| | LH1 | 960 | 1 | 24 | 54 | 84 |
| | HH1 | 960 | 0 | 28 | 58 | 88 |
| | LL5 | 60 | 6 | 5 | 35 | 65 |
| | HL5 | 60 | 5 | 10 | 40 | 70 |
| | HL4 | 120 | 5 | 11 | 41 | 71 |
| | HL3 | 240 | 4 | 14 | 44 | 74 |
| Cr | HL2 | 480 | 3 | 19 | 49 | 79 |
| | LH2 | 480 | 3 | 20 | 50 | 80 |
| | HH2 | 480 | 1 | 25 | 55 | 85 |
| | HL1 | 960 | 1 | 26 | 56 | 86 |
| | LH1 | 960 | 1 | 27 | 57 | 87 |
| | HH1 | 960 | 0 | 29 | 59 | 89 |

The principles described hereinbefore for determining the segment cost evaluation order are applied in the example provided in Table 4, namely that segments with a higher expected cost and a lower computational complexity for determining said cost are evaluated first. In particular:
- data segments are evaluated before GCLI segments;
- GCLI segments are evaluated before sign segments;
- segments whose gain is higher are evaluated first.

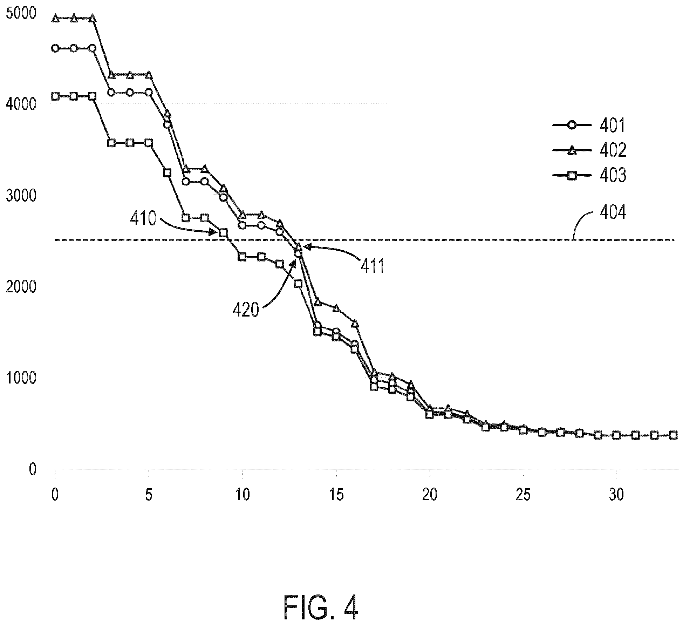

Fig. 4 illustrates the determination of a quantization level according to an embodiment of the invention. Values on the horizontal x-axis indicate quantization level values, a higher value corresponding to a higher quantization, i.e. more information removed from the coefficients after quantization. Values on the vertical y-axis indicate cost values of a set of segments in arbitrary units ranging from 0 to 5000, a higher value corresponding to a higher cost. Circle markers 401 indicate an actual cost of the set of segments as a function of the quantization level. Triangle markers 402 indicate an upper bound of the actual cost as a function of the quantization level. Square markers 403 indicate a lower bound of the actual cost as a function of the quantization level. Dashed line 404 indicates a target budget for the set of segments.

According to the present invention, a low value of the quantization level is selected first, for which the cost of the set of segments is evaluated incrementally in the budget computation step according to the predetermined evaluation order, such as for example the order provided in Table 4. When the cost of the set of segments exceeds the target budget, then the current budget computation step is stopped, the quantization level is increased, and a new budget computation step is performed for the increased value of the quantization level. Successive budget computation steps are performed iteratively for increasing values of the quantization level until a suitable value of the quantization level is found, i.e. one for which the cost of the set of segments is below the target budget. According to the invention, the suitable value of the quantization level is known to be optimal, i.e. the lowest possible value of the quantization level that is below the target budget. The image coefficients of the set of segments may then be entropy encoded according to said value of the quantization level for producing the portion of the encoded image.

Reference 410 indicate a quantization level value for which the lower bound of the cost of the set of segments is larger than the target budget. For instance, said lower bound may be based on a lower bound of the cost of a sign segment. Therefore, this value of the quantization level may be discarded with no need to compute the actual cost of the set of segments, thereby reducing the computational complexity of the budget computation step for this value of the quantization level.

Reference 411 indicates a quantization level value for which the upper bound of the cost of the set of segments is smaller than the target budget. For instance, said upper bound may be based on an upper bound of the cost of a sign segment. Therefore, the cost of the set of segments for this value of the quantization level is known to be smaller (or equal) to the target budget, i.e. to be a suitable value of the quantization level, with no need to compute the actual cost of the set of segments, thereby reducing the computational complexity of the budget computation step for this value of the quantization level. However, in order to determine if this suitable value of the quantization level is optimal, i.e. the lowest possible value of the quantization level that is below the target budget, the actual cost of the set of segments must be evaluated, i.e. the cost of all segments of the set must be computed.

Reference 420 indicates a quantization level value that is both suitable, i.e. below the target budget, and optimal, i.e. the lowest possible value of the quantization level that is below the target budget.

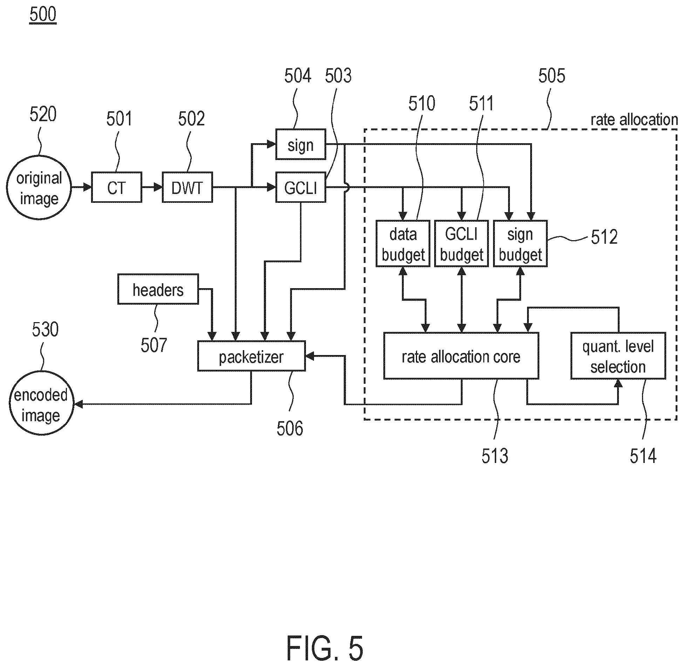

Fig. 5 schematically represents an encoder 500 for encoding an image according to an embodiment of the invention. Fig. 5 provides a block diagram of the encoder 500. The encoder 500 may be configured for performing the method of the invention for encoding at least one portion of an original image 520 into a corresponding portion of an encoded image 530. The encoder 500 comprises an optional color transform (CT) module 501, and a discrete wavelet transform (DWT) module for producing image coefficients based on input image samples from the original image 520. The CT module 501 and the DWT module 502 are optional; if they are not present, then the image coefficients may simply be equal to the input image samples. The encoder 500 further comprises a GCLI extraction module 503, a sign extraction module 504, a rate allocation module 505, a packetizer module 506, and a header generation module 507. The rate allocation module 505 comprises a data budget module 510, a GCLI budget module 511, a sign budget module 512, a rate allocation core module 513, and a quantization level selection module 514.

Modules 501-514 are software modules. Said modules should be interpreted as a way of distinguishing between different types of operations. Said modules may be comprised in a single system, i.e. the operations performed by said modules may be executed by a single processor. Said modules may also be comprised a distributed system, i.e. the operations performed by said modules may be executed by a plurality of processors.

The encoder 500 basically operates as follows. The main purpose of the rate allocation module 505 is to determine a suitable quantization level value so that the size of the portion of the encoded image 530 remains below a target budget. To this end, the encoder may perform lossy compression, i.e. selectively removing information from the coefficients of the original image for producing the portion of the encoded image 530. The encoded image 530 contains all information enabling a decoder to reconstruct a decoded image similar to the original image 520 before encoding, the difference between the original image 520 and the decoded image being the loss of information due to the lossy compression. The encoding is performed with the best effort to minimize this loss of information under the target budget constraint. Input image samples from the original image 520 may be processed by one or more optional decorrelative transforms, namely a color transform in the CT module 501, followed by a DWT transform in the DWT module 502, which produces decorrelated image coefficients in sign-magnitude representation. If no decorrelative transform is applied, then the image coefficients may simply be equal to the input image samples. The GCLI extraction module 503 and the sign extraction module 504 respectively compute GCLI and sign values from the image coefficients and transmit said values to the rate allocation module 505 and the packetizer module 506.

The rate allocation module determines a suitable value of the quantization level according to the method of the invention. Starting from a low quantization level value, it evaluates the cost of the set of segments incrementally according to the predetermined evaluation order until the cost of the set of segments exceeds the target budget. When the cost of the set of segments has exceeded the target budget, the value of the quantization level is increased and an new evaluation of the cost of the set of segments is performed incrementally according to the predetermined evaluation order. When the cost of the set of segments has not exceeded the target budget after the cost of all segments of the set of segments has been evaluated, then a suitable value of the quantization level is found, which is transmitted to the packetizer module 506. The data budget module 510, the GCLI budget module 511, and the sign budget module 512 are respectively configured for computing the cost of a data segment, a GCLI segment and a sign segment for a given value of the quantization level. The quantization level selection module 514 determines the current value of the quantization level. The rate allocation core module 513 acts as a hub for facilitating the communication between the budget modules 510-512, the quantization level selection module 514, and the packetizer module 506. Preferably, the rate allocation module 505 works precinct by precinct, i.e. with each set of segments comprising coefficients belonging to a single precinct, so as to allow a low-latency encoding of the original image 520.

The packetizer 506 receives the suitable quantization value from the rate allocation module 505, more precisely from the rate allocation core module 513. The packetizer 506 further receives header information from the header generation module 507. Based on these elements as well as on the data, GCLI and sign information received from the corresponding modules, the packetizer 506 first entropy encodes the data, GCLI and sign information using the suitable quantization value received from the rate allocation module 505. Then, the packetizer 506 packs the entropy-encoded information along with the header information in a so-called codestream for producing the portion of the encoded image 530.

In summary, the invention relates to a method, apparatus, and computer program for encoding at least one portion of an original image 520 into a corresponding portion of an encoded image 530 according to an encoding scheme in which an evaluation of a cost of segments of image coefficients is made according to a value of a quantization level, wherein said evaluation is performed in a budget computation step according to an incremental evaluation scheme based on a predetermined order.

Although the present invention has been described herein with respect to particular embodiments, it will readily be appreciated by a person skilled in the art that the present invention is not limited by what has been particularly shown and/or described herein, but that the scope of the invention is more generally defined by the following appended claims.

## Claims

1. Computer-implemented method for encoding at least one portion of an original image (520) into a corresponding portion of an encoded image (530) according to the following steps:
a) in an initialization step, initializing a quantization level to an initial value of the quantization level and providing a target budget (404) for the portion of the encoded image (530);
b) in a generation step, generating a set of segments from a set of image coefficients derived from the portion of the original image (520);
wherein the set of segments comprises at least one segment, and
wherein a segment is a software object comprising a subset of coefficients from the set of image coefficients and a cost function to be applied to the subset of coefficients with a given value of a quantization level for computing a cost of the segment for said value of the quantization level;
c) in a budget computation step, computing a cost (401) of the set of segments incrementally for the current value of the quantization level,
wherein the budget computation step is performed according to an incremental evaluation scheme based on a predetermined order, and
wherein the budget computation step comprises the following substeps, starting with a first segment in the set of segments as a current segment:
c)(i) computing a cost of the current segment for the current value of the quantization level;
c)(ii) storing the cost of the current segment in a memory;
c)(iii) adding the cost of the current segment to the cost (401) of the set of segments;
c)(iv) if the cost (401) of the set of segments exceeds the target budget (404), stopping the current budget computation step c);
c)(v) if at least one further segment is available in the set of segments, selecting a next segment in the set of segments as the new current segment, wherein the selection is made according to the predetermined order of the incremental evaluation scheme;
c)(vi) repeating the preceding substeps until the cost of each segment in the set of segments has been evaluated for the current value of the quantization level;
d) if the cost (401) of the set of segments has exceeded the target budget (404), increasing the value of the quantization level and performing a new budget computation step c) for the increased value of the quantization level;
e) if the cost (401) of the set of segments has not exceeded the target budget (404), entropy encoding the set of image coefficients according to the current value of the quantization level for producing the portion of the encoded image (530).

2. Method according to the preceding claim, wherein the predetermined order for the evaluation of the cost of segments in the budget computation step c) is based on a ratio of the expected cost of each segment in the set of segments divided by the computational complexity required for determining said cost, and wherein a segment with a higher such ratio is evaluated before a segment with a lower such ratio.

3. Method according to any one of the preceding claims, wherein the encoded image (530) conforms with a JPEG XS standard.

4. Method according to any one of the preceding claims, wherein the encoded image (530) comprises at least one sign subpacket.

5. Method according to any one of the preceding claims, wherein, after a suitable value of the quantization level has been determined, the method further comprises a refinement step before entropy encoding the set of image coefficients, wherein the suitable value of the quantization level is modified for at least one segment in the refinement step.

6. Method according to the preceding claim, wherein the suitable value of the quantization level is decreased for at least one segment in the refinement step.

7. Method according to any one of the preceding claims, wherein the cost of at least one segment is estimated using a lower bound of the cost of said segment.

8. Method according to any one of the preceding claims, wherein substep c)(i) further comprises reusing a count of the number of significant groups of coefficients computed for a lower value of the quantization level when computing the cost of the current segment for the current value of the quantization level.

9. Method according to the preceding claim, wherein the cost C_{DATA}(t) of a data segment comprising N_{CG} groups of N_{g} coefficients is computed for a quantization level value t according to the following formula, wherein SC(t-1) designates a count of the number of significant groups for a quantization level value t-1: ${C}_{DATA} \left(t\right) = {C}_{DATA} \left(t-1\right) - {N}_{g} ∗ SC \left(t-1\right) .$

10. Method according to any one of the preceding claims, wherein a lower bound of the cost C_{SIGN}(t) of a sign segment comprising N_{CG} groups of N_{g} coefficients is computed for a quantization level value t according to the following formula, wherein SC(t) designates a count of the number of significant groups for a quantization level value t: ${C}_{SIGN} \left(t\right) \geq 1 ∗ SC \left(t\right) .$

11. Method according to any one of the preceding claims, wherein an upper bound of the cost C_{SIGN}(t) of a sign segment comprising N_{CG} groups of N_{g} coefficients is computed for a quantization level value t according to the following formula, wherein SC(t) designates a count of the number of significant groups for a quantization level value t: ${C}_{SIGN} \left(t\right) \leq {N}_{g} ∗ SC \left(t\right) .$

12. Method according to any one of the preceding claims, wherein substep c)(i) further comprises reusing a cost of a corresponding segment of a different type when computing the cost of the current segment for the current value of the quantization level.

13. Method according to any one of the preceding claims, wherein costs that are independent from the value of the quantization level are subtracted from the target budget (404) before running the budget computation step c).

14. Computer program comprising instructions which, when the program is executed by a computer, cause the computer to carry out the method of any of the preceding claims.

15. Encoder comprising a processor and a memory and configured for encoding at least one portion of an original image (520) into a corresponding portion of an encoded image (530) according to the method of any one of claims 1 to 13.
